# EUROPÄISCHE PATENTSCHRIFT

(11) **EP 1 140 465 B1**
(45) Veröffentlichungstag und Bekanntmachung des Hinweises auf die Patenterteilung: **04.05.2005**
(21) Anmeldenummer: 99963387.8
(22) Anmeldetag: 03.12.1999
(51) Int. Cl.: B29C 47/88, B29K 27/12

(54) **VERFAHREN ZUR HERSTELLUNG VON FOLIEN AUS PVDF UND POLYACRYLATEN**
METHOD FOR PRODUCING FILMS OF PVDF AND POLYACRYLATES
PROCEDE DE PRODUCTION DE FILMS A BASE DE PVDF ET DE POLYACRYLATES

(30) Priorität: 22.12.1998 DE 19859393
(43) Veröffentlichungstag der Anmeldung: 10.10.2001
(73) Patentinhaber: Röhm GmbH & Co. KG, 64293 Darmstadt (DE)
(72) Erfinder: NUMRICH, Uwe, D-64846 Gro -Zimmern (DE); SCHÄFER, Bernhard, D-64289 Darmstadt (DE)
(86) Internationale Anmeldenummer: PCT/EP1999/009489
(87) Internationale Veröffentlichungsnummer: WO 2000/037237

(56) Entgegenhaltungen:
- EP-A- 0 386 711
- WO-A-96/40480
- JP-A- 2 052 720
- JP-A- 3 110 121
- US-A- 4 317 860
- US-A- 4 444 826
- US-A- 5 256 472

## Beschreibung

Die vorliegende Erfindung betrifft Verfahren zur Herstellung von Einschichtfolien, insbesondere von optisch hochwertigen, witterungs- und bruchbeständigen Schutz- und Dekorfolien, die Mischungen aus PVDF und Poly(meth)acrylaten enthalten. Des weiteren richtet sich die vorliegende Erfindung auf die Verwendung der so hergestellten Folien.

Folien, die Mischungen aus Fluor-Polymeren und Poly(meth)acrylaten enthalten, sind in der Fachwelt weithin bekannt. Insbesondere PVDF/PMMA-Blends haben hervorragende Eigenschaften, die deutlich besser sind als die der Einzelkomponenten, falls diese Polymere im richtigen Verhältnis gemischt werden. So läßt sich die ausgeprägte Kristallinität des PVDF durch Zusatz von mindestens 25% Poly(meth)acrylat auf ein Maß reduzieren, das die optischen Eigenschaften nicht mehr negativ beeinflußt. Der Zusatz von mindestens 40% PVDF zu Poly(meth)acrylat führt zu einer deutlichen Erhöhung der Chemikalienbeständigkeit. Werden mindestens 55% PVDF zugegeben, so verbessert sich darüber hinaus auch die (Tief)temperaturzähigkeit.

Folien aus diesen Mischungen wurden bisher entweder aus organischer Lösung auf Trägerfolien gegossen oder als Schmelze auf Trägerfolien extrusionsbeschichtet.

Das erste Verfahren ist mit hohen Investitionen verbunden, da die benötigten Lösungsmittel, wie N-Methylpyrrolidon, mit einer hohen Umweltgefährdung verbunden sind. Daher muß eine Freisetzung dieser Lösungsmittel in die Umwelt weitestgehend vermieden werden.

Des weiteren sind die Geschwindigkeiten, mit der die Folien auf diese Weise hergestellt werden können, relativ gering. Daher sind diese Verfahren insgesamt sehr teuer.

Ein zweiter Weg diese Folien herzustellen besteht darin, auf eine Trägerfolie einen Film zu extrudieren, wie dies in WO 96/40480 beschrieben ist.

Nachteilig an diesem Verfahren ist, daß die Trägerfolie eine relativ hohe Wärmebeständigkeit benötigt, da diese ansonsten von der heißen Schmelze verformt wird, wie dies beispielsweise in WO 96/40480 in Beispiel 2 beschrieben wird. Dementsprechend kann bei der Produktion von mehrschichtigen PVDF/PMMA-Folien nicht auf den Einsatz von relativ teuren Trägerfolien verzichtet werden. Bei der Herstellung von einschichtigen PVDF/PMMA-Folien ist dies Verfahren darüber hinaus aufwendig, da die Trägerschicht entfernt werden muß. Des weiteren wird die Trägerschicht in der Wärme mit der PVDF/PMMA-Schicht verbunden. Dies hat weitere Nachteile zur Folge. Insbesondere die Trübungswerte (Haze) werden durch diese Maßnahme beeinträchtigt.

Es sind zwar Versuche bekannt, PVDF/PMMA-Folien ohne eine Trägerfolie herzustellen vgl. JP-A-02052720. Diese Folien waren jedoch trüb und hatten nicht den gewünschten Oberflächenglanz.

In Anbetracht des hierin angegebenen und diskutierten Standes der Technik war es Aufgabe der vorliegenden Erfindung, ein Verfahren zur Herstellung von Einschichtfolien, die Mischungen aus PVDF und Poly(meth)acrylaten enthalten, zur Verfügung zu stellen, mit dem einschichtige PVDF und Poly(meth)acrylate enthaltende, optisch hochwertige, witterungs- und bruchbeständige Folien hergestellt werden können, ohne daß hierbei Lösungsmittel eingesetzt oder Trägerfolien in der Wärme beschichtet werden müssen.

Des weiteren lag der Erfindung die Aufgabe zugrunde ein möglichst kostengünstiges Verfahren zur Verfügung zu stellen.

Eine weitere Aufgabe bestand darin, ein lösungsmittelfreies Verfahren zu entwickeln, bei dem man Einschichtfolien mit einer besonders geringen Trübung erzeugt, die Poly(meth)acrylat und PVDF enthalten.

Darüber hinaus war es Aufgabe der Erfindung Verfahren zur Herstellung von Folien der zuvor genannten Art zu schaffen, die hohe Bahngeschwindigkeiten ermöglichen.

Gelöst werden diese Aufgaben sowie weitere, die zwar nicht wörtlich genannt werden, die sich aber aus den hierin diskutierten Zusammenhängen wie selbstverständlich ableiten lassen oder sich aus diesen zwangsläufig ergeben, durch Verfahren zur Herstellung von Folien, die PVDF und Poly(meth)acrylate enthalten, mit allen Merkmalen des unabhängigen Anspruchs 1.

Vorteilhafte Ausgestaltungen des erfindungsgemäßen Verfahrens sind Gegenstand der auf die unabhängigen Verfahrensansprüche rückbezogenen Ansprüche. mit dem Verfahren zur Herstellung von Einschichtfolien, die PVDF und Poly(meth)acrylate enthalten wobei man zunachst eine Poly(meth)acrylat und PVDF enthaltende Trockenmischung herstellt und diese Mischung zu einer Folie formt, indem man die Mischung auf eine Walze, die eine Temperatur ≤ 100°C, vorzugsweise ≤ 70°C, aufweist, extrudiert, wobei man die Temperatur der Mischung unterhalb der Gelbildungstemperatur der Mischung hält, beim Extrudieren vor dem Düseneintritt einen Filter anordnet und die Düsentemperatur höher als die Temperatur der Masse, beim Düseneintritt aber geringer als die Gelbildungstemperatur der Mischung hält, gelingt es auf eine unvorhersehbare Weise ein Verfahren zur Verfügung zu stellen, mit dem einschichtige PVDF und Poly(meth)acrylate enthaltende, optisch hochwertige, witterungs- und bruchbeständige Folien hergestellt werden können, ohne daß hierbei Lösungsmittel eingesetzt oder Trägerfolien in der Wärme beschichtet werden müssen.

Durch die erfindungsgemäßen Maßnahmen werden unter anderem insbesondere folgende Vorteile erzielt:
⇒ Erfindungsgemäße Verfahren können mit kommerziell erhältlichen Anlagen durchgeführt werden.
⇒ Es sind hohe Bahngeschwindigkeiten möglich.
⇒ Die durch das erfindungsgemäße Verfahren hergestellten Folien haben einen ausgezeichneten Oberflächenglanz und eine geringe Trübung.
⇒ Die erfindungsgemäß hergestellten Folien können bei Raumtemperatur inline mit weiteren Folien kaschiert werden.
⇒ Falls die Folie mit einer Kaschierschicht versehen werden soll, können diese je nach Anwendung aus preisgünstigen Polymeren gefertigt werden, da diese Kaschierfolien während der Herstellung keiner Wärmebelastung unterliegen.

Unter Fluor-Polymeren sind Polymere zu verstehen, die durch die radikalische Polymerisation von olefinisch ungesättigten Monomeren erhalten werden können, an deren Doppelbindung sich mindestens ein Fluor-Substituent befindet. Hierbei sind auch Copolymere eingeschlossen. Diese Copolymere können neben einem oder mehreren fluorenthaltenden Monomeren weitere Monomere enthalten, die mit diesen fluorenthaltenden Monomeren copolymerisierbar sind.

Zu den fluorenthaltenden Monomeren gehören unter anderem Chlortrifluorethylen, Fluorvinylsulfonsäure, Hexafluorisobutylen, Hexafluorpropylen, Perfluorvinylmethylether, Tetrafluorethylen, Vinylfluorid und Vinylidenfluorid.

Das Molekulargewicht kann in weiten Bereichen variieren, falls Hilfsstoffe oder Copolymere verwendet werden. Im allgemeinen liegt das Gewichtsmittel des Molekulargewichts der fluorenthaltenden Polymere im Bereich von 100 000 bis 200 000, bevorzugt im Bereich von 110 000 bis 170 000, ohne daß hierdurch eine Beschränkung erfolgen soll.

Die Schreibweise Poly(meth)acrylat umfaßt polymere Ester der Acrylsäure und der Methacrylsäure sowie Mischungen dieser Polymere oder Copolymere von Acrylaten und Methacrylaten.

Hierbei handelt es sich um Polymere die durch die radikalische Polymerisation von (Meth)acrylaten erhalten werden können. Diese Polymere umfassen auch Copolymere mit weiteren Monomeren.

Zu den besonders bevorzugten (Meth)acrylaten gehören unter anderem Methylmethacrylat, Methylacrylat, Ethylmethacrylat, Ethylacrylat, Propylmethacrylat, Propylacrylat, n-Butylmethacrylat, tert.-Butylmethacrylat, Isobutylmethacrylat, Hexylmethacrylat, Hexylacrylat, Cyclohexylmethacrylat, Cyclohexylacrylat, Benzylmethacrylat und Benzylacrylat.

Copolymerisierbare Monomere sind beispielsweise Vinylchlorid, Vinylidenchlorid, Vinylacetat, Styrol, substituierte Styrole mit einem Alkylsubstituenten in der Seitenkette, wie z.B. α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, und Diene, wie beispielsweise 1,3-Butadien und Divinylbenzol.

Besonders bevorzugt sind Poly(meth)acrylate, die Methyl(meth)acrylat enthalten.

Das Molekulargewicht der Poly(meth)acrylate kann in weiten Bereichen variieren. Wesentlich ist, daß das Polymer zu Folien extrudierbar ist. Dementsprechend können durch Variation des Copolymeranteils sowie durch Zugabe von Hilfstoffen, wie beispielsweise Weichmachern, auch Polymere mit höherem Molekulargewicht zu Folien extrudiert werden. Im allgemeinen liegt das Gewichtsmittel des Molekulargewichts der Poly(meth)acrylate aber vorzugsweise im Bereich von 30 000 bis 300 000 und besonders bevorzugt im Bereich von 80 000 bis 250 000.

Die Herstellung der oben erwähnten erfindungsgemäß zu verwendenden PVDF und Poly(meth)acrylate nach den verschiedenen Verfahren der radikalischen Polymerisation ist an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Im allgemeinen sind PVDF, die Poly(meth)acrylate und die oben genannten Ausgangsmonomere kommerziell erhältlich.

Besonders bevorzugte Mischungen enthalten 10 Gew.-% bis 90 Gew.-%, insbesondere 40 bis 75 Gew.-% Polyvinylidenfluorid (PVDF) und 90 bis 10 Gew.-%, insbesondere 60 bis 25 Gew.-% Polymethylmethacrylat (PMMA), wobei diese Werte auf die Gesamtmischung bezogen sind. Ganz besonders bevorzugtes PMMA enthält einen Comonomerenanteil (bis ca. 20 Gew.-%, bezogen auf die Menge des PMMA), wie beispielsweise Butylmethacrylat oder Methylacrylat, die die Verarbeitbarkeit verbessern. Das bevorzugte PVDF kann als Homopolymer und/ oder Copolymer verwendet werden.

Die extrudierbaren Polymermischungen können weitere Polymere enthalten, die sowohl mit PVDF als auch mit den Poly(meth)acrylaten mischbar sind. Hierzu gehören unter anderem Polycarbonate, Polyester, Polyamide, Polyimide, Polyurethane und Polyether.

Mischbarkeit der verschiedenen Substanzen bedeutet, daß die Komponenten eine homogene Mischung bilden, die keine Trübungen aufweist, welche auf eine Phasentrennung zurückzuführen sind.

Des weiteren können die Folien in der Fachwelt weithin bekannte Zusatzstoffe enthalten. Hierzu gehören unter anderem Antistatika, Antioxidantien, Farbstoffe, Flammschutzmittel, Füllstoffe, Lichtstabilisatoren und organische Phosphorverbindungen, wie Phosphite oder Phosphonate, Pigmente, Verwitterungsschutzmittel und Weichmacher.

Erfindungsgemäß können alle bekannten UV-Absorber eingesetzt werden. Besonders bevorzugt sind UV-Absorber vom Typ Benztriazol und Hydroxyphenyl-Triazin.

Ganz besonders bevorzugt sind UV-Absorber, die auf Triazin basieren. Diese UV-Absorber sind besonders haltbar und witterungsstabil. Des weiteren haben sie eine ausgezeichnete Absorptionscharakteristik.

Zur weiteren Erläuterung des erfindungsgemäßen Verfahrens wird Bezug auf die beigefügten Figuren 1 bis 3 genommen, ohne daß hierdurch eine Beschränkung erfolgen soll. Es zeigen:
- Figur 1: eine schematische Darstellung des Extrusionsverfahrens zur Herstellung von Folien;
- Figur 2: den schichtweisen Aufbau einer besonderen Ausführungsform einer erfindungsgemäß herstellbaren Folie und
- Figur 3: die Weiterverarbeitung einer durch das Verfahren der vorliegenden Erfindung hergestellten Folie in Spritzgußverfahren.

Erfindungsgemäß wird bei dem Verfahren zur Herstellung von Folien zunächst eine Mischung, vorzugsweise eine Trockenmischung oder Schmelzemischung, hergestellt, die zumindest ein Poly(meth)acrylat und PVDF enthält.

Das Mischen kann in herkömmlichen, für diesen Zweck weithin bekannten Vorrichtungen erfolgen. Die Temperatur bei der das Mischen erfolgt, liegt unterhalb der Geltemperatur der Mischung.

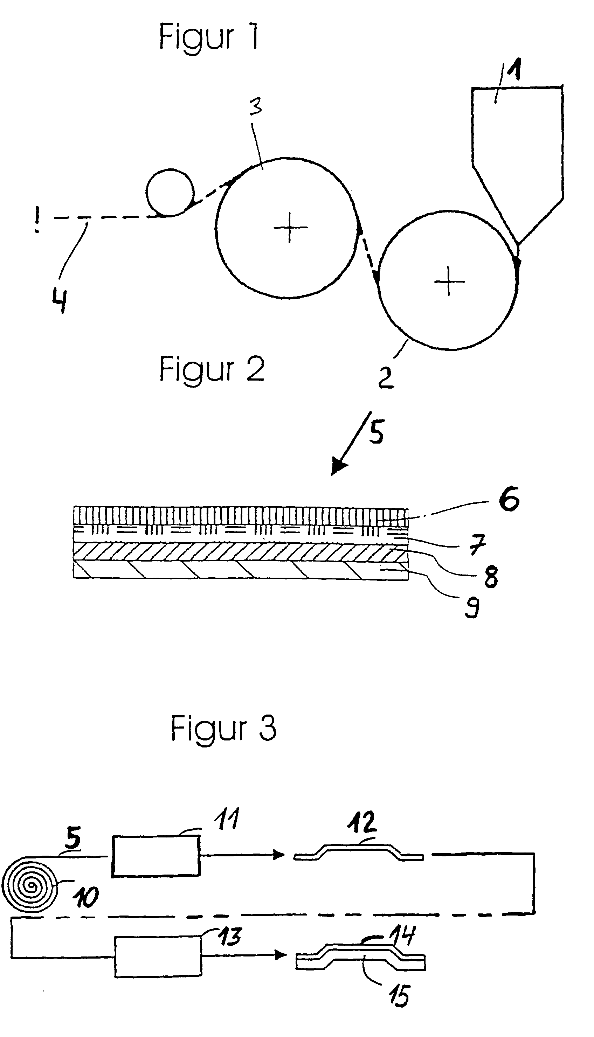

Die resultierende Mischung wird auf eine Walze extrudiert, die eine Temperatur kleiner oder gleich 100°C, bevorzugt kleiner oder gleich 70°C aufweist, wobei eine Folie geformt wird. Das Extrudieren von Polymeren zu Folien ist weithin bekannt und beispielsweise in Kunststoffextrusionstechnik II, Hanser Verlag, 1986, S.125 ff. beschrieben. Schematisch ist diese Extrusion in Figur 1 dargestellt. Die heiße Schmelze wird aus der Düse des Extruders 1 auf eine Kühlwalze 2 (chill roll) gegeben. Diese Chill-Roll-Walzen sind in der Fachwelt weithin bekannt, wobei zum Erhalt eines hohen Glanzes polierte Walzen verwendet werden. In dem erfindungsgemäßen Verfahren können aber auch andere Walzen als Kühlwalze verwendet werden. Eine weitere Walze 3 nimmt die auf der Walze 2 abgekühlte Schmelze zunächst auf, wobei man eine einschichtige Folie 4 erhält, die mit weiteren Schichten versehen werden kann.

Damit die entstehende Folie weitgehend frei von Verunreinigungen ist, wird vor dem Eintritt der Schmelze in die Düse ein Filter angeordnet. Die Maschenweite des Filters richtet sich im allgemeinen nach den eingesetzten Ausgangsstoffen und kann dementsprechend in weiten Bereichen variieren. Im allgemeinen liegen sie aber im Bereich von 300 µm bis 20 µm. Es können auch Filter mit mehreren Sieben unterschiedlicher Maschenweite vor dem Düseneintritt angeordnet werden. Diese Filter sind in der Fachwelt weithin bekannt und kommerziell erhältlich. Als weiteren Anhaltspunkt für den Fachmann können die beigefügten Beispiele dienen.

Um Folien mit hoher Güte zu erhalten, ist es des weiteren vorteilhaft besonders reine Rohstoffe einzusetzen.

PVDF bildet bei Temperaturen oberhalb von ca. 240°C zunehmend Gele (Herstellerangabe der Fa. Solvay). Diese Gelpartikel lassen sich nur relativ schlecht durch Filtrieren entfernen. Dementsprechend ist es notwendig, eine mögliche Gelbildung zu vermeiden. Daher wird bei Temperaturen extrudiert, die möglichst weit unterhalb der Geltemperatur liegen. Zur Herstellung von gelkörperarmen Folien bieten sich auch pulverförmige PVDF-Lieferformen an, deren mittlere Partikelgröße beispielsweise 0,2 mm beträgt. Diese werden im Scherfeld des Extruders kompletter aufgeschlossen.

Allerdings muß die Temperatur hoch genug sein, damit die Mischung zu einer Folie extrudiert werden kann, die eine hervorragende Oberflächengüte und eine möglichst geringe Trübung aufweist. Die optimale Temperatur ist beispielsweise von der Zusammensetzung der Mischung abhängig und kann daher in weiten Bereichen schwanken. Aber bevorzugte Temperaturen der Mischung bis zum Düseneintritt liegen im Bereich von 150 bis 210 °C, besonders bevorzugt im Bereich von 180 bis 200 °C. Hierbei muß die Temperatur der Mischung über den gesamten Formungsprozeß unterhalb der Geltemperatur gehalten werden.

Die Dicke der Folie kann über einen großen Bereich variieren, der im allgemeinen vom gewünschten Anwendungszweck abhängig ist. Häufig gewählte Foliendicken liegen im Bereich von 10 bis 200 µm. Die Foliendicke kann über Parameter die dem Fachmann bekannt sind, eingestellt werden.

Der Druck mit dem die geschmolzenen Mischung in die Düse gepreßt wird, kann beispielsweise über die Geschwindigkeit der Schnecke gesteuert werden. Der Druck liegt im allgemeinen in einem Bereich von 40 bis 100 bar, ohne daß das erfindungsgemäße Verfahren hierdurch beschränkt wird. Die Geschwindigkeit, mit der die Folien erfindungsgemäß erhalten werden können, ist dementsprechend größer als 5 m/s, insbesondere größer als 10 m/s, ohne daß hierdurch eine Beschränkung des erfindungsgemäßen Verfahrens erfolgen soll. Weitere Hinweise bezüglich der allgemeinen Verfahrensparameter erhält der Fachmann durch die beigefügten Beispiele.

Damit die erhaltene Folie eine hohe Oberflächengüte und eine geringe Trübung aufweist ist es wesentlich, daß man die Temperatur der Düse höher als die Temperatur der Mischung vor dem Düseneintritt, aber niedriger als die Geltemperatur wählt.

Bevorzugt wird die Düsentemperatur 5%, besonders bevorzugt 10% und ganz besonders bevorzugt 15% höher eingestellt als die Temperatur der Mischung vor dem Düseneintritt. Dementsprechend liegen bevorzugte Temperaturen der Düse im Bereich von 160°C bis 235°C, besonders bevorzugt 200 °C bis 230°C und ganz besonders bevorzugt 210°C bis 220°C.

Nachdem die Folie erhalten wurde, kann diese mit einer weiteren Folie kaschiert werden. Diese Folien dienen zum Schutz der PVDF/PMMA-enthaltenden Schicht vor Beschädigung während der nachfolgenden Verarbeitungsschritte. Des weiteren kann hierdurch eine weitere Verarbeitung der Folien erleichtert werden.

Besonders bevorzugt sind diese Schichten, die zum Schutz auf die PVDF/PMMA-enthaltende Schicht aufgebracht werden können, unter anderem aus Polyestern, wie Polybutylenterephthalat (PBT), Polyethylenterephthalat (PET), und/oder Polyolefinen, wie Polyvinylchlorid (PVC), Polypropylen (PP), Polyethylen (PE) und dergleichen.

Die PVDF/PMMA-enthaltenden Folien können auch mit Pigmenten versehen oder mit Farbstoffen bedruckt werden. Es ist auch möglich auf diesen Folien metallische Effekte zu erzielen. Diese Prozesse sind dem Fachmann bekannt und werden beispielsweise als gravure printing, gravure coating und micro gravure coating bezeichnet.

Auf diese mit Dekor oder anderen Verzierungen versehene Schicht können wiederum weitere Schichten aufgebracht werden, die zur Verbesserung der Haftung von nachfolgend aufgebrachtem Polymer dienen können.

Das Aufbringen dieser Schichten durch Kolamineren erfolgt bei bei erhöhter Temperatur. Diese Verfahren sind in der Fachwelt weithin bekannt und beispielsweise in Kunststoffextrusionstechnik II, Hanser Verlag, 1986, S. 320 ff. beschrieben.

Bevorzugt als Schichten sind Polyester, wie Polybutylenterephthalat (PBT), Polyethylenterephthalat (PET), und Polyolefine, wie Polyvinylchlorid (PVC), Polypropylen (PP), Polyethylen (PE), Acrylnitril-Butadien-Styrol-Copolymere (ABS), Acrylnitril-Styrol-Acrylester-Copolymere (ASA), Polycarbonat (PC) und Polyamide (PA) sowie Mischungen dieser Polymere.

Es ist für den Fachmann offensichtlich, daß diese Schichten in verschiedenen Anordnungen zu Mehrschichtfolien zusammengefügt werden können. Eine solche Folien kann dementsprechend mehrere Dekorschichten/Druckschichten in unterschiedlicher Reihenfolge aufweisen. Des weiteren können Mehrschichtfolien auch Klebstoffschichten enthalten, die sowohl zum Verbinden von Schichten aus unterschiedlichen Kunststoffen als auch zum Befestigen der Folien auf den zu schützenden Gegenständen dienen können.

Eine besondere Ausführungsform einer solchen Mehrschichtfolie 5 ist beispielsweise in Figur 2 dargestellt.

In Figur 2 bezeichnet 6 eine Schutzschicht, die die Oberfläche der PVDF/PMMA-enthaltenden Schicht 7 vor Beschädigungen während der Verarbeitung schützt. Die Schutzschicht 6 weist im allgemeinen eine Dicke im Bereich von 10 µm bis 100 µm auf.

Schicht 8 bezeichnet eine Dekorschicht, die beispielsweise durch Pigmentauftrag auf die Schicht 7 entsteht, wobei diese Pigmente beispielsweise durch Offsetdruckverfahren oder auch durch Tiefdruckverfahren aufgebracht werden können. Die Dekorschicht umfaßt auch Folien, die zu diesem Zweck kommerziell erhältlich sind und durch Kolaminieren hinzugefügt werden können.

Auf diese Schicht 8 kann, wie dies in Figur 2 dargestellt ist, eine Trägerschicht 9 angeordnet werden. Diese Schicht kann auch zur Erhöhung der Kompatibilität mit einem Harz dienen, das in einem nachfolgenden Prozeß auf diese Trägerschicht aufgebracht wird. Trägerschichten zu diesem Zweck weisen im allgemeinen eine Dicke im Bereich von 100 bis 1200, vorzugsweise 400 bis 600, µm auf.

Es wird eine Rollenware 10 erhalten, aus der in einem Inline-Prozeß Inserts thermogeformt werden, die in speziellen Spritzgußvorrichtungen weiterverarbeitet werden können. Dies ist in Figur 3 schematisch abgebildet. Die Rollenware 10 wird in einer dafür vorgesehenen Vorrichtung entrollt, wobei beispielsweise die in Figur 2 abgebildete Mehrschichtfolie 5 in eine Thermoformmaschine 11 übergeben wird. In der Thermoformmaschine werden aus der Mehrschichtfolie 5 Inserts 12 gefertigt, die in einer speziellen Spritzgußmaschine 13 in eine Form eingelegt und anschließend hinterspritzt werden. Hierbei wird das Harz auf die Trägerschicht 9 gegeben. Die Schutzschicht 6 der in Figur 2 dargestellten Mehrschichtfolie 5 kommt mit dem Spritzgußharz nicht in Berührung, sondern liegt an der Spritzgußform an. Hierdurch wird ein spritzgegossenes Einbauteil 15 erhalten, das mit einer hervorragend haftenden, UV-beständigen Dekoraußenseite 14 ausgestattet ist.

Die Schutzschicht 6, die die Dekoraußenseite 14 aufweist, falls eine Mehrschichtfolie 5, die in Figur 2 dargestellt ist, verwendet wurde, kann nach dem Einbau des Einbauteils 15 entfernt werden. Man erhält hierdurch eine Oberfläche mit einer hervorragenden Güte.

Auf diese Weise lassen sich unter anderem Bau- und Zubehörteile für Kraftfahrzeuge, wie beispielsweise Armaturenbretter, Mittelkonsolen, Türrahmenverkleidungen, Spoiler und Kotflügel, herstellen.

Die in Figur 2 dargestellte Trägerschicht 9 kann auch zum Schutz der Dekorschicht dienen, wobei auf die Außenseite der Trägerschicht 9 beispielsweise eine Klebstoffschicht aufgebracht werden kann, so daß selbstklebende Dekorfolien erhalten werden, die neben einer ausgezeichneten Oberflächengüte eine hervorragende Haltbarkeit haben. Diese Dekorfolien können unter anderem ebenfalls im Automobilbereich Verwendung finden.

Darüber hinaus können die erfindungsgemäß erhaltenen Folien als Witterungsschutz- und Dekorfolien für Fensterprofile, Gartenmöbel, Türen, Balustraden, Gebäudeverkleidungen, Abdeckungen von Solarbatterien, Verhautung von Flugzeuginnenteilen und Überdachungselementen dienen.

Die nachfolgenden Beispiele dienen zur Erläuterung der Erfindung, ohne daß hierdurch eine Beschränkung erfolgen soll.

### Beispiel 1

27,8 kg ®Solef 1010 von Solvay, 11,9 kg ®Plexiglas 8N von Röhm GmbH und 0,32 kg UV-Absorber (®Mark LA 31, bezogen von Palmarole AG, Basel) wurde bei einer Temperatur von 25°C in einem Taumel-Mischer gemischt. Die so erhaltene Trockenmischung wurde in einem Extruder der Firma Breyér zu einer Folie extrudiert. Hierbei wurde die erhaltene Trockenmischung bei einer Temperatur von ca. 195 °C (Temperaturprofil: υ₁ = 135 °C, υ₂ = υ_{3 bis 10} = 190 °C, υ_{Schmelzpumpe} = 200 °C, υ_{Düse} = 220 °C) geschmolzen. Die geschmolzene Mischung wurde mit einem Druck von 40 bar extrudiert, wobei die Schnecke mit einer Rotationsgeschwindigkeit von 13 U/min betrieben wurde. Vor dem Düseneintritt wurde ein Gneuß-Filter mit einer Maschenweite von 40 µm angeordnet. Die Düsentemperatur wurde auf 220 °C eingestellt. Der Abstand Düse-Walze betrug 3 mm. Die Temperatur der spiegelhochglanzpolierten Walze betrug 24 °C.

Die Folie wurde mit einer Geschwindigkeit von 14 m/s hergestellt. Die so erhaltene Folie wurde hinsichtlich ihrer Qualität untersucht.

Die Trübung (Haze) wurde gemäß ASTM-D 1003 bestimmt. Das Elastizitätsmodul, die Zugfestigkeit und die Reißdehnung wurden gemäß ISO 527-312 bestimmt.

Gelkörper sind, insbesondere mittels Vergrößerung erkennbare, bei Auf- und Abbewegung der Folie dunkel/hell aufblinkende Fehlstellen. Zur Bestimmung dieser Fehlstellen wurde ein Partikelzählgerät COPEX LP 3 der Firma AGFA-GAEVERT verwendet.

Darüber hinaus wurde die Beständigkeit der Folie gegen verschiedene Chemikalien untersucht. Hierzu wurde ein Wattebausch mit dem Lösungsmittel gesättigt das in Tabelle 1 angegeben ist (Benzin (Ottokraftstoff, bleifrei); Aceton; Ethanol/ Wasser 70/30 Mischung (Volumenprozent)), wobei der Wattebausch in das Lösungsmittel eingetauscht und überschüssiges Lösungsmittel abtropft wurde, ohne daß dieser ausgedrückt wurde.

Der so behandelte Wattebausch wurde auf die Folienprobe gelegt und mit einem umgedrehten Uhrglas abgedeckt. Die Probengröße betrug jeweils 5*5 cm. Nach 48 Stunden wurde die Folienprobe entnommen und visuell auf Veränderungen bezüglich Glanz und Oberflächenbeschaffenheit untersucht.

Traten keine sichtbaren Veränderungen auf, so wurde die Probe als beständig eingestuft. Traten geringe Veränderungen auf, so war die Probe bedingt beständig. Traten starke Veränderungen auf, so war die Probe nicht beständig.

Die Meßwerte und die Beurteilung hinsichtlich der chemischen Beständigkeit sind in Tabelle 1 aufgeführt.

### Beispiel 2

Das Beispiel 1 wurde im wesentlichen wiederholt, außer, daß 6 kg ®Solef 1010 von Solvay, 4 kg ®Plexiglas 8N von Röhm GmbH anstatt den in Beispiel 1 angegebenen Mengen dieser Polymere verwendet wurde, wobei der Gewichtsanteil des UV-Absorbers, bezogen auf die Gesamtmasse, konstant gehalten wurde.

Die erhaltenen Versuchsergebnisse sind ebenfalls in Tabelle 1 aufgeführt.

### Beispiel 3

Das Beispiel 1 wurde im wesentlichen wiederholt, außer, daß 3 kg ®Plexiglas 6N von Röhm GmbH anstatt dem in Beispiel 1 eingesetzten ®Plexiglas 8N verwendet wurde, wobei der Gewichtsanteil des UV-Absorbers, bezogen auf die Gesamtmasse, konstant gehalten wurde.

Die erhaltenen Versuchsergebnisse sind ebenfalls in Tabelle 1 aufgeführt.

### Beispiel 4

Das Beispiel 1 wurde im wesentlichen wiederholt, außer, daß 7 kg ®Solef 6012 von Solvay anstatt dem in Beispiel 1 eingesetzten ®Solef 1010 verwendet wurde, wobei der Gewichtsanteil des UV-Absorbers, bezogen auf die Gesamtmasse, konstant gehalten wurde.

Die erhaltenen Versuchsergebnisse sind ebenfalls in Tabelle 1 aufgeführt.

### Vergleichsversuch 1

Der in Beispiel 1 beschriebene Versuch wurde wiederholt, außer daß die Schmelze und die Düse jeweils auf 245 °C temperiert wurde.

Die erhaltenen Versuchsergebnisse sind ebenfalls in Tabelle 1 aufgeführt, wobei die Anzahl der Gelkörper auf das Vierfache anstieg.

### Vergleichsversuch 2

Der in Beispiel 1 beschriebene Versuch wurde wiederholt, außer daß die Schmelze und die Düse jeweils auf 180 °C temperiert wurde.

Die erhaltenen Versuchsergebnisse sind ebenfalls in Tabelle 1 aufgeführt, wobei der Haze-Wert überproportional anstieg.

**Tabelle 1**

| | Bsp. 1 | Bsp. 2 | Bsp. 3 | Bsp. 4 | Vgl. 1 | Vgl. 2 |
|---|---|---|---|---|---|---|
| Haze [%] | 1,5 | 1,5 | 1,4 | 3,5 | 0,9 | 4,4 |
| E-Modul [Mpa] | 970 | 850 | 1020 | 930 | 795 | 690 |
| Zugfestigkeit [Mpa] | 45 | 42 | 38 | 41 | 46 | 42 |
| Reißdehnung [%] | 306 | 300 | 282 | 285 | 380 | 300 |
| Anzahl der Gelkörper | gering | gering | gering | gering | hoch | gering |
| Benzin | bes. | bes. | bes. | bes. | bes. | bes. |
| Aceton | bes. | bes. | bes. | bes. | bes. | bes. |
| Ethanol / Wasser | bes. | bes. | bes. | bes. | bes. | bes. |
| Die Abkürzung "bes." in Tabelle 1 steht für beständig; | | | | | | |

## Patentansprüche

1. Verfahren zur Herstellung von Einschichtfolien, die PVDF und Poly(meth)acrylate enthalten, bei welchem man zunächst eine Poly(meth)acrylat und PVDF enthaltende Mischung herstellt und diese Mischung zu einer Folie formt, indem man die Mischung auf eine Walze, die eine Temperatur ≤ 100°C aufweist, extrudiert, wobei man die Temperatur der Mischung unterhalb der Gelbildungstemperatur der Mischung hält, beim Extrudieren vor dem Düseneintritt einen Filter anordnet und die Düsentemperatur höher als die Temperatur der Masse beim Düseneintritt aber geringer als die Gelbildungstemperatur der Mischung hält.

2. Verfahren nach Anspruch 1,
**dadurch gekennzeichnet,**
**daß** die Düsen temperatur 5%-15% höher eingestellt wird als die Temperatur der Mischung vor dem Düseneintritt.

3. Verfahren nach Anspruch 1 oder 2,
**dadurch gekennzeichnet,**
**daß** die Temperatur der Mischung vor dem Düseneintritt im Bereich von 150 bis 210 °C und die Temperatur der Düse im Bereich von 160°C bis 235°C liegt.

4. Verfahren nach einem der vorhergehen den Ansprüche,
**dadurch gekennzeichnet,**
**daß** zur Extrusion eine Mischung eingesetzt wird, die 10 bis 90 Gew.-% PVDF und 90 bis 10 Gew.-% PMMA, bezogen auf das Gewicht der Gesamtmischung, enthält.

5. Verfahren nach einem der vorhergehenden Ansprüche,
**dadurch gekennzeichnet,**
**daß** die Temperatur der Mischung vor dem Düseneintritt im Bereich von 180 bis 200 °C liegt.

6. Verfahren nach einem der vorhergehenden Ansprüche,
**dadurch gekennzeichnet, daß** die Mischung eine Trockenmischung ist und einen UV-Absorber enthält.

7. Verfahren nach Anspruch 6,
**dadurch gekennzeichnet,**
**daß** der UV-Absorber vom Typ Benztriazol oder Hydroxyphenyl-Triazin ist.

8. Verfahren nach einem der vorhergehenden Ansprüche,
**dadurch gekennzeichnet,**
**daß** auf die erhaltene Folie in-line zur Extrusion eine Kaschierfolie bei Raumtemperatur aufgebracht wird.

9. Verfahren nach Anspruch 8,
**dadurch gekennzeichnet, daß** die Kaschierfolie aus Polyestern und/öder Polyolefinen ist.

10. Verfahren nach einem der vorhergehenden Ansprüche,
**dadurch gekennzeichnet, daß** die Dicke der Kaschierfolie im Bereich von 10 bis 100 µm liegt.

11. Verfahren nach einem der vorhergehenden Ansprüche,
**dadurch gekennzeichnet,**
**daß** die Temperatur der Walze, auf die die Mischung extrudiert wird, ≤ 70 °C ist.

12. Verfahren nach einem der vorhergehenden Ansprüche,
**dadurch gekennzeichnet, dass** die Einschichtfolien oder unter deren Verwendung hergestellte Mehrschichtfolien
als Witterungsschutz- und Dekorfolien für Gartenmöbel, Fensterprofile, Türen, Balustraden, Gebäudeverkleidungen, Bau- und Zubehörteile im Kraftfahrzeugbereich, Abdeckungen von Solarbatterien, Verhautung von Flugzeuginnenteilen sowie Überdachungselementen verwendet werden.

## Claims

1. A method for manufacturing single-layer films which contain PVDF and poly(meth)acrylates, wherein first of all a mixture containing poly(meth)acrylate and PVDF is prepared and this mixture is formed to a film by extruding the mixture onto a roll that has a temperature of ≤ 100°C, the temperature of the mixture being kept below the gel-formation temperature of the mixture, a filter being disposed upstream from a nozzle inlet during extrusion and the nozzle temperature being kept higher than the temperature of the mass but, at the nozzle inlet, lower than the gel-formation temperature of the mixture.

2. A method according to claim 1,
**characterized in that** the nozzle temperature is set 5% to 15% higher than the temperature of the mixture upstream of the nozzle inlet.

3. A method according to claim 1 or 2, **characterised in that** the temperature of the mixture upstream of the nozzle inlet is in the range from 150 to 210°C and the temperature of the nozzle is in the range from 160°C to 235°C.

4. A method according to one of the preceding claims, **characterised in that** a mixture which contains 10 to 90 wt% of PVDF and 90 to 10 wt% of PMMA relative to the weight of the total mixture is used for extrusion.

5. A method according to one of the preceding claims, **characterised in that** the temperature of the mixture upstream from the nozzle inlet is in the range from 180 to 200°C.

6. A method according to any one of the preceding claims, **characterised in that** the mixture is a dry mixture and contains a UV absorber.

7. A method according to claim 5, **characterised in that** the UV absorber is of the benzotriazole or hydroxyphenyltriazine type.

8. A method according to any one of the preceding claims, **characterised in that**, for extrusion, a laminating film is applied in-line to the resulting film at room temperature.

9. A method according to claim 8, **characterised in that** the laminating film comprises polyesters and/or polyolefins.

10. A method according to any one of the preceding claims, **characterised in that** the thickness of the laminating film is in the range from 10 to 100 µm.

11. A method according to any one of the preceding claims, **characterised in that** the temperature of the roll onto which the mixture is extruded is ≤ 70°C.

12. A method according to any one of the preceding claims, **characterised in that** the single-layer films or multi-layer films produced using them are used as weathering-resistant and decorative films for garden furniture, window sections, doors, balustrades, claddings for buildings, structural parts and accessories in the motor-vehicle sector, covers for solar batteries, covers for interior parts of aircraft, and roofing elements.

## Revendications

1. Procédé de production de films à une seule couche contenant du PVDF et des poly(méth)acrylates, selon lequel on produit tout d'abord un mélange contenant du poly(méth)acrylate et du PVDF puis on met en forme ce mélange pour obtenir un film, en extrudant le mélange sur un rouleau présentant une température ≤ 100 °C, tandis que l'on maintient la température du mélange en dessous de la température de congélation, on dispose un filtre devant l'entrée de la buse lors de l'extrusion et on maintient la température de la buse plus élevée que la température de la masse lors de l'entrée dans la buse mais plus faible que la température de congélation du mélange.

2. Procédé selon la revendication 1,
**caractérisé en ce que**
la température de la buse est réglée de façon à être de 5 % à 15 % plus élevée que la température du mélange avant l'entrée dans la buse.

3. Procédé selon la revendication 1 ou 2,
**caractérisé en ce que**
la température du mélange avant l'entrée dans la buse est comprise entre 150 et 210 °C et la température de la buse est comprise entre 160 et 235 °C.

4. Procédé selon l'une des revendications précédentes,
**caractérisé en ce que**
l'on utilise pour l'extrusion un mélange contenant 10 à 90 % en poids de PVDF et 90 à 10 % en poids de PMMA, par rapport au poids total du mélange.

5. Procédé selon l'une des revendications précédentes,
**caractérisé en ce que**
la température du mélange avant l'entrée dans la buse est comprise entre 180 et 200 °C.

6. Procédé selon l'une des revendications précédentes,
**caractérisé en ce que**
le mélange est un mélange sec et contient un absorbeur d'UV.

7. Procédé selon la revendication 6,
**caractérisé en ce que**
l'absorbeur d'UV est de type benzotriazole ou hydroxyphényl-triazine.

8. Procédé selon l'une des revendications précédentes,
**caractérisé en ce que**
l'on place sur le film obtenu en ligne avec l'extrusion un film de dissimulation à température ambiante.

9. Procédé selon la revendication 8,
**caractérisé en ce que**
le film de dissimulation se compose de polyesters et/ou de polyoléfines.

10. Procédé selon l'une des revendications précédentes,
**caractérisé en ce que**
l'épaisseur du film de dissimulation est comprise entre 10 et 100 µm.

11. Procédé selon l'une des revendications précédentes,
**caractérisé en ce que**
la température du rouleau sur lequel est extrudé le mélange est ≤ 70 °C.

12. Procédé selon l'une des revendications précédentes,
**caractérisé en ce que**
les films à une seule couche ou les filins à plusieurs couches produits à partir de ceux-ci sont utilisés en tant que films de protection contre les intempéries et films de décoration pour meubles de jardin, en tant que profilés de fenêtres, portes, balustrades, habillages de bâtiments, pièces de construction et d'équipement dans le domaine automobile, recouvrements de panneaux solaires, revêtements de pièces intérieures d'avions ainsi qu'éléments de couverture.
